(19) Europäisches Patentamt
European Patent Office
Office européen des brevets

(11) **EP 2 089 780 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(21) Anmeldenummer: **07815161.0**

(22) Anmeldetag: **29.10.2007**

(51) Int Cl.:
***B23H 7/26*** (2006.01)   ***G05B 19/404*** (2006.01)
***B25J 9/16*** (2006.01)

(86) Internationale Anmeldenummer:
**PCT/AT2007/000494**

(87) Internationale Veröffentlichungsnummer:
**WO 2008/052234 (08.05.2008 Gazette 2008/19)**

(54) **VERFAHREN ZUR BESEITIGUNG DES SCHLEPPFEHLERS DES ARBEITSPUNKTES EINER VORRICHTUNG**

METHOD FOR ELIMINATING THE LAG ERROR OF THE OPERATING POINT OF A DEVICE

PROCÉDÉ D'ÉLIMINATION DE L'ERREUR DE TRAÎNÉE DU POINT DE TRAVAIL D'UN DISPOSITIF

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.10.2006 AT 18172006**

(43) Veröffentlichungstag der Anmeldung:
**19.08.2009 Patentblatt 2009/34**

(73) Patentinhaber: **Ehrenleitner, Franz**
**72213 Altensteig-Walddorf (DE)**

(72) Erfinder: **Ehrenleitner, Franz**
**72213 Altensteig-Walddorf (DE)**

(74) Vertreter: **Patentanwälte**
**Barger, Piso & Partner**
**Mahlerstrasse 9**
**Postfach 96**
**1015 Wien (AT)**

(56) Entgegenhaltungen:
**EP-A- 1 612 004**   **EP-A- 1 705 616**
**WO-A-2006/056349**   **WO-A-2006/094320**
**FR-A- 2 670 705**

• **REINHART G ET AL: "Multibody simulation of machine tools as mechatronic systems for optimization of motion dynamics in the design process" ADVANCED INTELLIGENT MECHATRONICS, 1999. PROCEEDINGS. 1999 IEEE/ASME INTERNATIONAL CONFERENCE ON ATLANTA, GA, USA 19-23 SEPT. 1999, PISCATAWAY, NJ, USA,IEEE, US, 19. September 1999 (1999-09-19), Seiten 605-610, XP010356762 ISBN: 0-7803-5038-3**

**Beschreibung**

Die Erfindung betrifft ein Verfahren zur Beseitigung bzw. zumindest zur wesentlichen Verringerung des Schleppfehlers eines gegenüber einer festen Plattform mittels zumindest eines Aktuators bewegten Punktes (TCP) bzw. einer bewegten Plattform unter Last und/oder Belastungen bei Bewegung des Punktes bzw. der Plattform entlang einer vorgegebenen Trajektorie in einem vorgegebenen zeitlichen Verlauf, der Soll-Bewegung, für die unter Zugrundelegung eines Starrkörpermodells der Vorrichtung ein zeitlicher Verlauf der Länge und der Kraft jedes Aktuators bestimmt wird, entsprechend der EP 614 547 A (entsprechend der US 5,568,379 A) in Übereinstimmung mit dem einleitenden Teil des Anspruches 1.

Ein derartiger Schleppfehler tritt bei der Bewegung von Lasten, Werkzeugen und dergleichen, im Folgenden zumeist kurz "Arbeitspunkt", "TCP" (Tool Center Point) oder "bewegliche Plattform" genannt, entlang einer Trajektorie üblicherweise auf. Als Schleppfehler (auch Geschwindigkeitsverstärkung, im englischen als "contouring error" oder "following error" bezeichnet) wird die Tatsache bezeichnet, dass die tatsächliche momentane Position des Arbeitspunktes auf der Trajektorie nicht mit der Sollposition auf der Trajektorie übereinstimmt. Die momentane Größe des Schleppfehlers wird mittels Sensoren bestimmt und dem Regelkreis, der die Bewegung steuert, übermittelt. Zur Beseitigung bzw. Verkleinerung des Schleppfehlers werden in der Literatur integrative Regelelemente in einem zweiten Regelkreis vorgeschlagen, wobei eingestanden wird, dass eine Beseitigung bzw. deutliche Reduzierung bei "höheren" Fehlern wie "harten" oder gar (theoretisch) unstetigen Änderungen des Sollwerts auch durch mehrere zusätzliche Regelkreise nicht möglich ist.

Mit der Problematik der kontinuierlichen Erfassung des Schleppfehlers beschäftigt sich die EP 471695 A (entsprechend der US 5,192,174 A), um z.B. feststellen zu können, ob es zur Abnutzung einer Bewegungsbahn od.dergl, kommt.

Die FR 2 670 705 A1 beschreibt das Modell eines bestimmten realen Systems, welches auch die zu transportierende Last mit einbezieht. Durch diese Maßnahme wird genau für den Fall des Transportes dieser einen Last, eine die gesteckten Ziele erreichende Lösung gefunden, doch bei jeder anderen Last wird das Modell versagen. Dass diese Modellbildung nicht willkürlich die Last mit einbezieht, das heißt, dass es diese Modellbildung nicht ermöglicht, auf die Last zu verzichten, geht daraus hervor, dass die Modellbildung vom Bewegungsablauf her erfolgt, weshalb auch keine Variation des Weges zu berücksichtigen ist. Diese Form der Modellbildung muss daher nicht nur für jede Vorrichtung neu durchgeführt werden, sondern sogar für jede neue Last, weshalb speziell ein in der heutigen Zeit gefordertes flexibles System nicht vorliegt.

Die WO2006/094320 A1 beschreibt ein Verfahren zur Bestimmung der elastischen Verformung speziell von parallelkinematischen Vorrichtungen unter Last, wobei zu Beginn die Anlenkpunkte auf der festen und der beweglichen Plattform, als auch die Ersatzfederkonstanten der Aktuatoren und Lager bestimmt werden. Mit diesen Werten wird die reale Position der beweglichen Plattform bestimmt, welche daraufhin mit der theoretischen Position verglichen und gegebenenfalls durch Betätigung entsprechender Aktuatoren in Übereinstimmung gebracht wird.

Die EP 614 547 A (entsprechend der US 5,568,379 A), möchte ohne Kenntnis der nicht-linearen Systemanteile eine Regelung schaffen, die die Vorteile des Sliding-Mode-Controllers mit denen des Fuzzy Controllers verknüpft und schafft dies, indem sie einen Sliding-Mode-Controller mit einem Fuzzy Controller verbindetl Dabei wird der Schleppfehler, von dessen einfacher Ermittlung die Druckschrift wie selbstverständlich ausgeht, mit seiner zeitlichen Ableitung linear kombiniert und als Kompensationsterm verwendet.

Die EP 583 494 A beschäftigt sich mit der Kompensation des Schleppfehlers zwischen einem Roboter und einem Förderband und schlägt vor, im Rückkopplungszweig des Regelkreises ein Filter mit vorgebbarer Zeitkonstante vorzusehen, wodurch der Lagesollwert empirisch so kompensiert werden kann, dass der Istwert der Position mit dem gewünschten Sollwert übereinstimmt.

Die WO 99/28095 A, entsprechend der CA 2 312 802 A, beschäftigt sich nicht mit dem Schleppfehler, sondern mit dem Problem der Abweichung der Ist-Position einer Vorrichtung, beispielsweise einer Bearbeitungsmaschine in Form eines Hexapods, von der Trajektorie. Dazu werden die elastischen Deformationen, die zu Folge der Inertialkräfte und der Stellkräfte auftreten, erfasst und zu einem Modell vereint und dazu benutzt, die "befohlenen Aktuatorlängen" Schritt für Schritt entsprechend den gemessenen Abweichungen entsprechend anzupassen. Trotz Berücksichtigung der Stellkräfte, der InertialKräfte und der elastischen Deformationen ist das Modell selbst rein statisch, für Schleppfehlerbeseitigung daher nicht geeignet, und reagiert auf Abweichungen von der Soll-Position zufolge dieser Größen erst nach dem Feststellen der Abweichung.

Die JP 07-276273 A betrifft das gleiche Problem wie die WO 99/28095A und löst es dadurch, dass die sogenannte Gesamtstarrheitsmatix der Vorrichtung und ihre Jacobimatrix ermittelt und die deformative Wirkung der Arbeitskraft am Manipulator mittels dieser beiden Matrizen berechnet wird. Wenn Abweichungen der Ist-Position des Arbeitspunktes von der Trajektorie festgestellt werden, werden die durch die Gesamtstarrheitsmatrix berechenbaren Deformationen bestimmt und sodann werden die notwendigen Änderungen der Stellgrößen der Aktuatoren berechnet und angewandt. Auch diese Druckschrift verwendet somit ein starres, statisches, Modell, das bei der Korrektur festgestellter Positionsabweichungen auch die momentan wirkenden Kräfte misst und die dadurch bewirkte Deformation der Vorrichtung mit berücksichtigt.

Die Veröffentlichung "The 321-Hexa: A Fully-Parallel Manipulator with Closed-Form Position and Velocity Kinematics"; XP 010235946, befasst sich mit der Kinematik der ideal-unelastischen Vorrichtung mit spielfreien, "harten" Gelenken, etc. und liefert somit das theoretische, mathematische Grundgerüst für diese spezielle Vorrichtung.

Die WO 01/76829 A betrachtet die Abweichung der Position der beweglichen Plattform einer parallelkinematischen Vorrichtungen unter der Wirkung einer Last von der Trajektorie und kommt zu einer Lösung entsprechend der oben abgehandelten JP 07-276273 A.

Die US 5,111,590 A, die US 4,778,318 A, die US 4,262,336 A und die US 3,941,988 A beschäftigen sich mit Werkzeugmaschinen, mehrachsigen Werkzeugen und ähnlichem, und behandeln dabei am Rande das Problem des Schleppfehlers, ohne darauf näher einzugehen.

Ganz allgemein werden Roboter, Werkzeugmaschinen, Transportvorrichtungen, die wiederholt Bewegungen ausführen und ähnliches, im Folgenden zumeist einfach "Maschine" oder "Vorrichtung" genannt, offline programmiert, die früher übliche Online-Programmierung ist wegen der damit verbundenen Standzeit der Maschine fast vollständig abgekommen. Eine derartige Programmierung erfolgt im Wesentlichen folgendermaßen:

Die beabsichtigte Trajektorie (Bewegungsbahn) eines definierten Punktes (Messerkante bei Drehmaschinen, Haken bei Lasthebemaschinen etc., im Folgenden zumeist "Arbeitspunkt", "TCP" (Tool Center Point) oder "bewegliche Plattform" genannt) wird in einem Koordinatensystem passend festgelegt. Wenn notwendig, kann die Orientierung des betrachteten Arbeitspunktes über zwei weitere Punkte oder durch passend definierte Orientierungswinkel beschrieben werden. Aus dem bekannten Maschinenumfeld können nun durch das auf die jeweilige Maschine ausgerichtete Simulationsmodell die notwendigen Daten für die Vor- bzw. Rückwärtskinematik, für eventuelle Störkonturen etc. berechnet werden und es kann die Durchführbarkeit der geplanten Bewegung beurteilt werden. Diese Arbeitsplätze und die eigentliche Maschine sind miteinander so verbunden, dass sodann die Maschine die zuvor programmierte Bewegung durchführt, wobei im Allgemeinen noch eine maschineninterne Steuerlogik die erhaltenen Daten in die entsprechenden, der Maschine angepassten Daten (theoretische Achsbewegungen etc.) umformt.

Bei der tatsächlichen Bewegung treten nun Störungen auf, die von der Natur der jeweiligen Maschine und von der jeweiligen Bewegung und unter Umständen der Last bzw. dem Werkzeug abhängen. Zu diesen Störgrößen gehören die träge Masse, die Reibung, die thermische Dilatation, die Schnittkräfte (bzw. Arbeitskräfte) bei Arbeitsmaschinen, die Windkräfte bei Lasthebemaschinen, die elastische und unter Umständen partiell plastische Deformation von Teilen des gesamten kinematischen Apparates zwischen den festen Lagern der Aktuatoren bzw. anderen beweglichen Teilen einerends und dem betrachteten Arbeitspunkt andernends, die Verschmutzung von Gleitbahnen, hydraulische Kräfte beim Eintauchen der Last in Tauchbäder, etc., etc.. All diese und weitere Störgrößen führen zum Schleppfehler, worunter in der vorliegenden Anmeldung die zeitliche Abweichung des Ist-Zeitpunktes des Erreichens einer Position des TCP vom Soll-Zeitpunkt des Erreichens dieser Position auf der Trajektorie verstanden wird. Dies ist gleichbedeutend mit der geometrischen Abweichung zwischen Ist-Position und Soll-Position entlang der Trajektorie zu jedem vorgegebenen Zeitpunkt. Der Ausgleich der geometrischen Abweichung des TCP von der Trajektorie spielt dabei nur in zweiter Linie eine Rolle.

Alle bekannten Regelsysteme versuchen den so verursachten Schleppfehler dadurch zu minimieren, dass sie in ihre Regelkreise Korrekturglieder oder weitere, übergeordnete Regelkreise einbauen, die stets auf Messungen des momentanen Istwertes der Position des Arbeitspunktes, unter Umständen kombiniert mit dessen "Vorgeschichte" oder seiner Geschwindigkeit, etc. beruhen. Damit können aber alle veränderlichen Störgrößen (die oben nur zum Teil genannt sind), nicht kompensiert werden, sie führen wiederum zum Schleppfehler, der erst, nachdem ein Sensor ihn erfasst hat, vom "Hauptregelkreis" gemäß dessen sturen Programm bearbeit wird.

Dazu kommt, dass beim Bremsen, somit beim Annähern und Erreichen des Endpunktes der beabsichtigten Trajektorie, die momentane Ist-Position des Arbeitspunktes vor der Soll-Position liegt, was zu Kollisionen führen kann.

Schließlich kann es durch den Schleppfehler zum Vibrieren bzw. Pendeln des Arbeitspunktes kommen, das insbesondere dann, wenn das Steuerprogramm (ungewollt) entsprechende Parameter aufweist, sich Aufschaukeln kann (Resonanzkatastrophe) und das Stillsetzen und Abwarten des Abklingens der Schwingungen erforderlich macht.

Unabhängig vom Schleppfehler bewirken die Störgrößen, dass der Arbeitspunkt die beabsichtigte Trajektorie verlässt und unter Umständen den beabsichtigten βewegungsendpunkt nicht mit der notwendigen geometrischen Genauigkeit erreicht, ein zumindest ebenso großes Problem wie der Schleppfehler. Mit diesem Problem beschäftigt sich die AT 501 167 B des Anmelders, entsprechend der WO2006/094320 A und der daraus hervorgegangenen US-Anmeldung. Die in diesen Druckschriften offenbarte Erfindung löst das Problem auf der Basis der Erkenntnis, dass es auf die Bestimmung und gegebenenfalls Kompensation der elastischen Verformung zwischen einer festen und einer beweglichen Plattform einer kinematischen Vorrichtung unter Last zurückzuführen ist.

Zur Beseitigung des Problems wird ein Verfahren angewandt, bei dem zuerst die Geometrie der Anlenkpunkte auf der festen Plattform und der beweglichen Plattform bzw. gegebenenfalls einer Zwischenplattform bestimmt und gespeichert werden, dass die Ersatzfederkonstanten der Lagerungen im Fundament, der beweglichen und gegebenenfalls der Zwischenplattform (Anlenkpunkte der Aktuatoren), die Ersatzfederkonstanten der Aktuatoren und die Ersatzfederkonstanten der Lager bestimmt und gespeichert werden, dass weiters die momentane theoretische Länge der Aktuatoren aufgrund der Einstellung ihrer Antriebe bestimmt wird, dass daraus die theoretische Lage aller Anlenkpunkte bzw. aller Aktuatoren im Raum für diese Werte bestimmt wird, dass aus dieser Geometrie und der Last, die entweder bekannt ist oder durch Sensoren an den Aktuatoren und/oder der beweglichen Plattform bestimmt wird, die auf die einzelnen Aktuatoren, Gelenke und Lager wirkenden Kräfte bestimmt werden, dass schließlich aus diesen Kräften und den Ersatzfederkennlinien die reale momentane Lage der Lager und Länge und Lage der Aktuatoren bestimmt werden, woraus das reale momentane geometrische Bild und damit die momentane reale Position der beweglichen Plattform bestimmt wird, und dass diese reale Position mit der zuvor berechneten theoretischen Position verglichen und gegebenenfalls durch Betätigung entsprechender Aktuatoren in Übereinstimmung gebracht wird. Dann erst wird der Vergleich mit den Istwerten durchgeführt.

Auf diese Weise kann man Abweichungen der beweglichen Plattform, so wird in dieser Druckschrift der Arbeitspunkt genannt, von der gewünschten Trajektorie zufolge des Abweichens der Vorrichtung vom ideal starren Körper der einzelnen Bestandteile und des Abweichens der Lager vom ideal starren und spielfreien Lager vorausberechnen und durch entsprechende Änderungen der Einstellung der Aktuatoren ausgleichen.

Selbstverständlich wird man dennoch nicht auf Überwachungssensoren verzichten, die die jeweilige Ist-Position des Arbeitspunktes feststellen und so erhobene Abweichungen über eines der üblichen Regelprogramme minimieren bzw. ausgleichen, doch werden durch die in dieser Druckschrift beschriebenen Maßnahmen die Abweichungen, die tatsächlich noch auftreten, um Größenordnungen kleiner als wenn auf diese Maßnahme verzichtet wird.

Dazu kommt als weiterer Vorteil dieses Standes der Technik, dass die dort vorgeschlagenen Korrekturen, nachdem das Grundprogramm (Grundmodell) einmal ausgearbeitet ist, keine zusätzliche Rechenkapazität benötigen, somit ideal einsetzbar sind.

Ein Problem, insbesondere beim Verfahren von Lasten ist es, dass unabhängig davon, welche Strategien man anwendet, um den Arbeitspunkt (die bewegliche Plattform, die Last) möglichst genau auf und entlang der vorgegebenen Trajektorie zu führen, zu Schwingungen und Vibrationen in der Vorrichtung kommt. Dies kann das Pendeln bei einer an einem Seil hängenden Last sein, Vibrationen bei Lasten, die an komplexen Seilgebilden mit Spann- und Stabilisierungsseilen, oder am Ende von Kranauslegern und anderen im Wesentlichen "festen" Gebilden, insbesondere wenn die mehrteilig ausgeführt sind, wobei deren einzelnen Teile durch Verbindungselemente miteinander verbunden sind. So kommt es zu Abweichungen der Lage des Arbeitspunktes entlang der Trajektorie im Vergleich zu der Solllage des Arbeitspunktes, die er zu einem vorgegebenen Zeitpunkt einnehmen soll, d.h., er bewegt sich schneller oder langsamer entlang der Trajektorie als beabsichtigt.

Diese Abweichungen sind im Allgemeinen klein gegenüber der Länge der Trajektorie, spielen aber, wie bereits weiter oben erwähnt, insbesondere beim Annähern des Arbeitspunktes an seine Endposition eine Rolle, da in so gut wie allen Fällen diese Position möglichst genau und in vielen Anwendungsgebieten möglichst zum vorbestimmten Zeitpunkt erreicht werden soll. Es ist im Stand der Technik oft notwendig, gegen Ende der Bewegung Pausen einzulegen oder zumindest die Geschwindigkeit drastisch zu reduzieren, um ein Abklingen der Schwingungen abzuwarten.

Es ist Aufgabe der Erfindung, ein Verfahren anzugeben, das in der Lage ist, die genannten Nachteile bei der eingangs definierten Vorrichtung zu vermeiden und die genannten Ziele zu erreichen. Die Erfindung betrifft somit ein Verfahren zur Bestimmung und gegebenenfalls Kompensation der elastischen Verformung von beweglichen Bauteilen, insbesondere von parallelkinematischen Vorrichtungen, unter der Einwirkung der Trägheit, der Antriebskraft und gegebenenfalls der Arbeitskraft (Schnittkraft, etc.) in Richtung der Trajektorie des beweglichen Bauteiles.

Erfindungsgemäß werden diese Ziele, kurz gesagt, dadurch erreicht, dass die Massen, Steifigkeiten und Federkonstanten und die Abweichungen der Lager von idealen Lagern der betrachteten Vorrichtung bzw. deren Komponenten in Richtung der Trajektorie betrachtet werden, dass bei Errichtung bzw. Programmierung der Vorrichtung, ausgehend vom üblichen Starrkörpermodell ein Modell, das diese elastischen, massebehafteten Eigenschaften und die zu erwartenden Kräfte (Wind, Schnittkraft, Last, etc.) berücksichtigt, erstellt wird, dass gegebenenfalls dieses elastische Modell durch iteratives Durchlaufen der bisherigen Schritte verbessert wird, und dass im Betrieb der Vorrichtung dieses Modell zumindest bei der Bestimmung des in Richtung der Trajektorie wirkenden zeitlichen Verlaufes der Antriebskräfte der Aktuatoren verwendet wird. Bei gebogenen Trajektorien gilt dies mutatis mutandis, bevorzugt durch Zerlegung in geradlinige Einzelabschnitte, die die echte Trajektorie annähern.

Erste Versuche haben gezeigt, dass es auf diese Weise tatsächlich einfach möglich ist, nach einmaliger Berechnung der Parameter der betrachteten Vorrichtung diese so zu betreiben, dass Schwingungen bzw. Vibrationen so gut wie vollständig vermieden werden und eine im Stand der Technik nicht zu erhaltende Übereinstimmung zwischen der momentanen Solllage des Arbeitspunktes und der momentanen Ist-Lage des Arbeitspunktes zu schaffen.

Erfindungsgemäß werden die Ziele bei einer Kinematik der eingangs definierten Art dadurch erreicht, dass

a) Vor Inbetriebnahme ein Modell der Vorrichtung geschaffen wird, das die Massenverteilung, Geometrie und die Elastizität in Bezug zum bewegten Punkt (7) gegenüber der festen Plattform, zumindest entlang der Trajektorie wiedergibt;

b) Rechnerisch vor Inbetriebnahme der Vorrichtung die Abweichung der Lage des bewegten Punktes (7), von der für den jeweiligen Zeitpunkt betrachteten Soll-Position, zumindest entlang der Trajektorie, zufolge der aus dem Starrkörpermodell bekannten Kräfte der Aktuatoren, der auf die Vorrichtung wirkenden bekannten äußeren Kräfte, und der aus der Soll-Bewegung ableitbaren Massenwirkungskräfte bestimmt werden;

c) Rechnerisch vor Inbetriebnahme der Vorrichtung am Modell aus den bestimmten Abweichungen und/oder der zeitlichen Abfolge dieser Abweichungen die Änderungen der Länge und/oder Kraft jedes Aktuators bestimmt werden, die notwendig sind, um die Abweichung der Lage des bewegten Punktes (7) von der Soll-Position zu eliminieren, und dass diese geänderten Werte in das Modell als Soll-Werte der Länge und/oder Kraft jedes Aktuators für die betrachtete Soll-Bewegung aufgenommen werden;

d) die Schritte a) bis c) gegebenenfalls iterativ wiederholt werden;

e) Im Betrieb der Vorrichtung dieses Modell des Zusammenhangs zwischen dem Sollwert der Länge/Kraft jedes Aktuators mit der Soll-Bewegung verwendet wird.

Dabei ist zu b) noch zu bemerken, dass ja die wirkende Kraft durch die Kenntnis der Vorrichtung und ihrer Tätigkeit (=Belastung) in den meisten Fällen bekannt ist. Wenn es sich um Vorrichtungen handelt, die unterschiedliche Lasten tragen, so ist die wirkende Kraft mittels der genannten Sensoren zu Beginn der Bewegung festzustellen und im Modell zu verwenden. Es ist nicht gemeint, die momentan wirkende Kraft in zeitlicher Abhängigkeit zu bestimmen und bei der Modellbildung zu berücksichtigen, da ja die Modellbildung vor Betriebsaufnahme abgeschlossen ist. Selbstverständlich ist es möglich, für mehrere Lastfälle und/oder Bahnkurven etc. eine Mehrzahl von Modellen vorzubereiten und im Bedarfsfall entsprechend auszuwählen, bis hin zur quasi stetigen Abdeckung aller möglichen Betriebszustände in einem entsprechend "mehrdimensionalen" Betriebsraum.

Die Lösung der allgemeinen Aufgabe umfasst neben den obigen Schritten noch die Schaffung der Ersatzkinematik, was dem Fachmann in Kenntnis der Erfindung keine Schwierigkeiten bereitet. Es kann dabei die für den betrachteten Anwendungsfall zu erwartende Belastung und Antriebskraft bei der Wahl des Ersatzstabwerkes insofern berücksichtigt werden, als Symmetrien zur weiteren Vereinfachung genutzt werden.

Um zu den notwendigen Ersatzfederkonstanten zu kommen, können am realen Bauteil durch entsprechende reale Belastung und Vermessung der realen Deformation die einzelnen Komponenten ermittelt werden, die dann am Ersatzstabwerk den einzelnen Stäben, Lagern, Angriffspunkten zugeordnet werden, um zu einem übereinstimmenden Bild im Bereich der "beweglichen Plattform" zu kommen. Statt der Messung realer Deformation ist auch die Durchrechnung der Deformation des Bauteiles, beispielsweise mittels finiter Elemente, möglich. Es ist dabei zu bedenken, dass diese Berechnung nur einmal durchgeführt werden muss, und das unabhängig von der späteren Benutzung des erhaltenen Ergebnisses während der Belastung des Bauteiles, sodass der hohe Rechenaufwand hier keine nachteiligen Effekte mit sich bringt. Weiters ist dabei zu bedenken, dass es sich um Berechnungen von Deformationen handelt, die (zumindest jede für sich) um Größenordnungen kleiner ist als die Größe des Bauteiles bzw. sein Arbeitsweg.

Statt der Betätigung der Aktuatoren der 3-2-1-Kinematik bei der speziellen Aufgabe (dort ist diese Kinematik ja nur ein Modell) ist bei der allgemeinen Aufgabe noch die Rückrechnung anhand des Modells und die Bestimmung der an der realen Vorrichtung vorzunehmenden Betätigung der Aktuatoren notwendig, was aber, da ja das Modell existiert, ohne großen Aufwand möglich ist.

Der Begriff "Arbeitspunkt" steht in seiner allgemeinen Bedeutung ganz einfach für den geometrischen Bereich des Bauteiles, dessen Lageänderung bzw. Geschwindigkeitsänderung berechnet werden soll, und ist bevorzugt auch am realen Bauteil ein massiver, u.U. als starr anzusehender Teil, wie: das Ende des Kranauslegers, die Schneide des Werkzeuges (TCP - Tool Center Point), der Authängungspunkt des Isolators eines Strommastes, die Spitze der Messsonde einer Messvorrichtung, die Halterung eines Drahtes für Funkenerosion, etc.. Im Vergleich dazu steht "feste Plattform" im allgemein für eine Basis, die im Rahmen der gestellten Aufgabe als "fest" anzusehen ist, unabhängig von der wirklichen Situation in Relation zum Erdboden und ist somit eine Frage der zweckmäßigen Definition.

Aus den Ergebnissen der Untersuchung des realen Bauteiles wird die erfindungsgemäße 3-2-1-Ersatzkinematik samt Ersatzfederkonstanten abgeleitet, je nach Anwendungsgebiet mit oder ohne Deformation der (oder einiger) Lager. Auf die 3-2-1-Ersatzkinematik werden sodann die realen Kräfte rechnerisch angewandt. Die errechneten Deformationen (Lageänderungen zwischen fester und beweglicher Plattform) geben auf direkte oder leicht rückrechenbare Weise die Lageänderung am realen Bauteil und ermöglichen so die notwendigen Korrekturen bzw. liefern die gewünschten Kenntnisse zur Änderung der Kräfte und/oder Längen der Aktuatoren.

Eine weitere deutliche Verbesserung kann erreicht werden, wenn zusätzlich zur Elastizität der Vorrichtung noch deren innere Dämpfung berücksichtigt wird. Es wird dabei, wie in der Mechanik und speziell der Dynamik üblich, bevorzugt eine geschwindigkeitsabhängige Dämpfung mit konstantem Dämpfungsfaktor als Annäherung an die realen Verhältnisse gewählt. Die Bestimmung kann wie die der Elastizität empirisch oder rechnerisch oder durch eine Kombination erfolgen. Die durch die Berücksichtigung der Dämpfung erzielbare weitere Reduktion des Schleppfehlers ist merklich, während die Strukturbelastung sich kaum mehr ändert.

Die Erfindung wird im Folgenden an Hand der Zeichnung näher erläutert. Dabei zeigt

die Fig. 1 eine reale Parallelkinematik mit einer aus einem Rohr bestehenden beweglicher Plattform,

die Fig. 2 die 3-2-1-Ersatzkinematik mit aufgelöster beweglicher Plattform,

die Fig. 3 die 3-2-1-Ersatzkinematik mit schematisch eingezeichneten Eisatzfedern,

die Fig. 4 bis 7 zeigen die Ausbildung einer Ersatzkinematik im Detail,

die Fig. 8 eine Ersatzkinematik einfachster Art und

die Fig. 9 bis 12 die Auswirkungen der Anwendung der Erfindung auf die Bewegung der Ersatzkinematik.

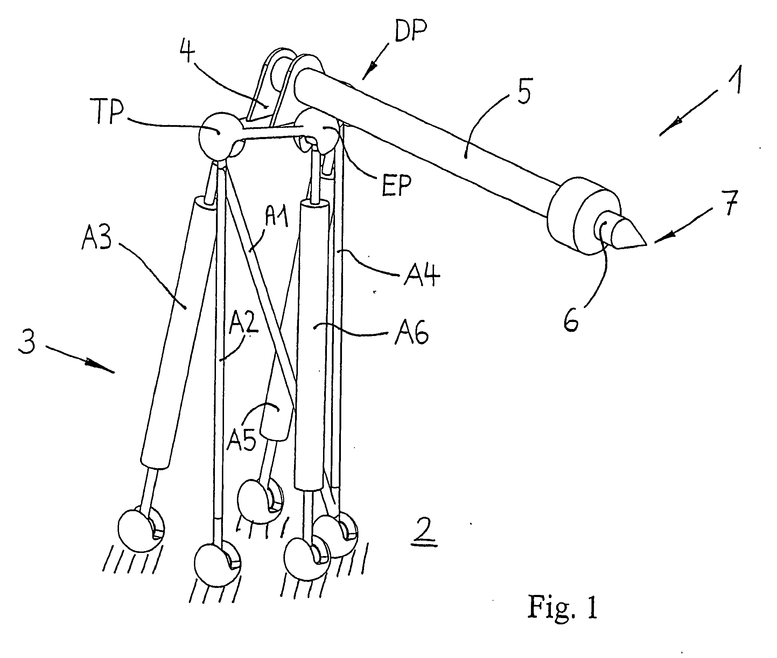

In Fig. 1 ist rein schematisch eine parallelkinematische Vorrichtung 1 in perspektivischer Ansicht dargestellt. Sie besteht aus einer festen Plattform 2, die beispielsweise das Fundament sein kann oder auch ein Schlitten oder ein Fahrwerk, auf dem die eigentliche Parallelkinematik 3 bzw. die sie bildenden Stäbe und Aktuatoren verschenkbar gelagert ist. Die anderen Enden der Stäbe und Aktuatoren, im Folgenden kurz unter der Bezeichnung Aktuator zusammengefasst, tragen einen Arbeitspunkt, im dargestellten Ausführungsbeispiel eine bewegliche Plattform 4. Diese bewegliche Plattform 4 weist im dargestellten Ausführungsbeispiel ein fest mit ihr verbundenes Rohr 5 auf, an dessen freiem Ende ein Werkzeughalter 6 schematisch angedeutet ist, dessen Spitze den Tool Center Point TCP 7 repräsentiert.

Da die verstellbaren Aktuatoren der Vorrichtung 1 zwar im Bereich der Reichweite den TCP 7 an jeden beliebigen Ort bringen können, aber dabei seine Orientierung nicht beeinflussen können, sind im Werkzeughalter 6 üblicherweise weitere, nicht dargestellte, Verstellmechanismen vorgesehen, die es zumindest in Grenzen erlauben, die Orientierung des TCP 7 mit der gewünschten Orientierung in Einklang zu bringen.

Die eigentliche Parallelkinematik 3 ist nach dem bekannten 3-2-1 Prinzip aufgebaut, das heißt, dass drei Aktuatoren A1, A2 und A3 einen gemeinsamen Abgriffspunkt, den Trippelpunkt TP, an der beweglichen Plattform 4 aufweisen und zwei weitere Aktuatoren, die Aktuatoren A4 und A5, an dem in Fig. 1 vom Rohr 5 verdeckten Doppelpunkt DP angreifen, während der Aktuator A6 nur für sich allein am Einzelpunkt EP angreift.

Im dargestellten Ausführungsbeispiel sind die Aktuatoren A3, A5 und A6 als längenveränderliche Aktuatoren dargestellt, die Aktuatoren A1 A2 und A4 als Stäbe konstanter Länge. Dies dient nur der Illustrierung und muss keinesfalls so sein, es können andere, oder auch mehr als die drei, Aktuatoren längenveränderlich ausgestaltet sein, dies kann auch den Aufbau des Werkzeughalters 6 beeinflussen. Wie bereits erwähnt, werden üblicher Weise nur längenveränderliche Stäbe als Aktuatoren bezeichnet, doch wird dies in der Beschreibung und den Ansprüchen, weil es für die Erfindung selbst keine Rolle spielt, zur besseren Lesbarkeit nicht so gehandhabt, sondern es werden im allgemeinen alle Stäbe ohne Rücksicht darauf, ob es sich um solche fester Länge oder Aktuatoren im engeren Sinne handelt, als Aktuatoren bezeichnet.

Die bewegliche Plattform 4 ist in ihrer Lage im Raum gegenüber der festen Plattform 2 durch die Länge der Aktuatoren A1 bis A6 und die Lage der Fußpunkte dieser sechs Stäbe auf der festen Plattform 2 und der beweglichen Plattform 4 eindeutig festgelegt und damit auch die Lage des TCP 7, da er ja mittels des Rohres 5 als Bestandteil der beweglichen Plattform 4 anzusehen ist.

Wie aus der Form und Dimensionierung der beweglichen Plattform 4 leicht ersichtlich ist, wird diese durch Kräfte, die auf den TCP 7 wirken, deformiert, sodass die bewegliche Plattform 4, ebenso wie die Parallelkinematik 3, nicht als starr anzusehen ist, sondern als elastisch deformierbares Gebilde.

Bei einer ganzen Reihe von Anwendungsgebieten ist es nun notwendig, die momentane Lage des TCP 7 und, über die Zeit gesehen, dessen Bewegungsbahn, mit hoher Genauigkeit zu kennen bzw. einzuhalten. Selbst wenn man die Aktuatoren und die bewegliche Plattform 4 äußert massiv und damit steif ausbildet, bestehen Probleme mit der Beweglichkeit in den Lagern und, bei den längenveränderlichen Aktuatoren, mit der Steifigkeit deren Antriebe.

Dazu kommt, dass ein Gebilde wie die bewegliche Plattform 4 mit dem daran befestigten Rohr 5 und der Werkzeughalterung und Werkzeug 6 bis zum TCP 7 in ihrer Deformation nur sehr schwer und auch mit modernen Rechnern nur langsam zu erfassen ist.

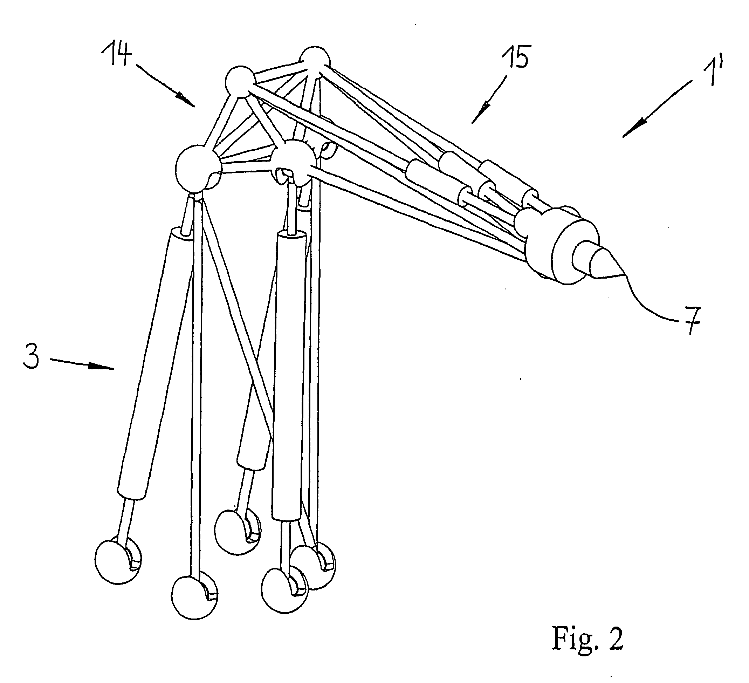

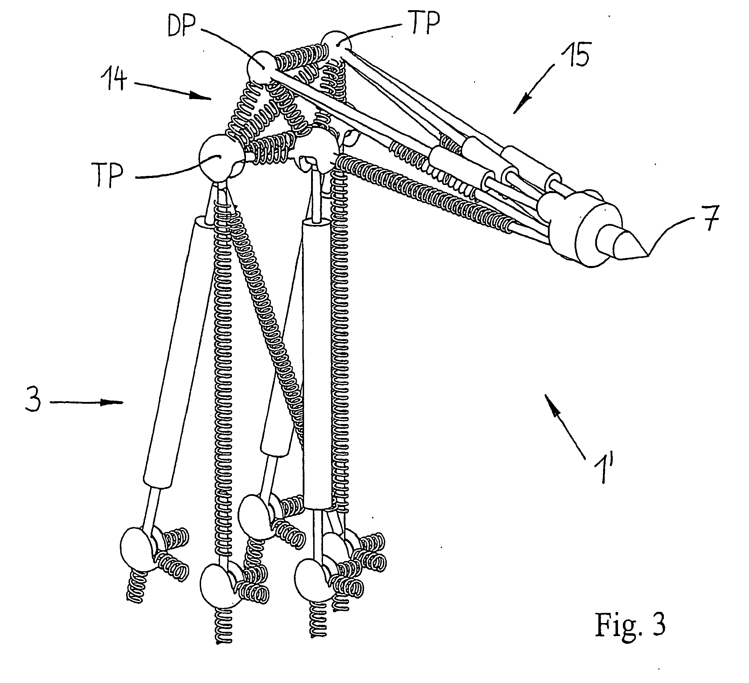

Diese Schwierigkeiten kann man erfindungsgemäß umgehen, indem man die feste Plattform 4 durch das aus Fig. 2 ersichtliche zweifache Modell einer 3-2-1 Parallelkinematik ersetzt, ein festes Stabwerk 14 für die eigentliche bewegliche Plattform 4 und ein verstellbares 3-2-1-Stabwerk 15 für das Rohr 5 samt Werkzeughalter 6 und Werkzeug bis zum TCP 7. Die längenveränderlichen Aktuatoren E1, E2 und E3 dienen im verstellbaren Stabwerk 15 als Ersatz für die im Werkzeughalter 6 enthaltenen Verstellmechanismen. Diese Stabwerke 3, 14, 15 gemäß der Fig. 2 werden nun erfindungsgemäß durch die in Fig. 3 angedeuteten Ersatzfederkräfte ergänzt bzw. ersetzt, wobei im dargestellten Beispiel auch die in den Lagern an der festen Plattform 2 auftretenden Deformationen mittels der schematisch eingezeichneten Ersatzfederkräfte berücksichtigt sind.

Die Ersatzfederkräfte können beispielsweise für die Fußpunkte der Parallelkinematik 3 auf der festen Plattform 2 durch einfache Versuche bestimmt werden, die Ersatzfederkräfte für die in das Stabwerk 14 und 15 aufgelöste bewegliche Plattform 4 samt Rohr 5 können entweder durch eine Berechnung nach der Methode der finiten Elemente ermittelt werden, oder es wird ebenfalls durch einen Versuch, das heißt durch praktische empirische Messung, die Steifigkeit in den einzelnen Richtungen ermittelt und diese Komponenten werden dann den einzelnen Ersatzstäben zugeordnet.

Diese umfangreichen Messungen bzw. Berechnungen werden vor dem Zusammenbau und der Inbetriebnahme der Vorrichtung vorgenommen und unterliegen somit keiner zeitlichen Vorgabe, es ist auch möglich, die notwendigen Berechnungen auf einer anderen Rechenanlage durchzuführen als später zum Betrieb der Vorrichtung zur Verfügung steht.

Durch die im Modell bekannte Geometrie, entsprechend der Fig. 3, ist es bei bekannter Stellung der längenveränderlichen Aktuatoren stets möglich, sehr rasch die theoretische Position des TCP 7 zu bestimmen. Wenn nun die auf ihn wirkende Kraft bekannt ist, was im Falle eines Werkzeugträgers durch Dehnmessstreifen oder piezoelektrische Sensoren ohne weiteres möglich ist, so ist es in Kenntnis der Ersatzkinematik gemäß Fig. 3 und der auf diese wirkende Kraft leicht und rasch möglich, die Verschiebungen der Lagerpunkte und die Längenänderungen der Aktuatoren, auch deren Längenänderung über die Zeit und somit letztlich auch die von ihnen aufzubringende Kraft zu bestimmen und so die reale Position und Orientierung des TCP 7 zu berechnen. Ein Vergleich dieses Ergebnisses mit dem oben genannten und zuvor ermittelten Ergebnis ohne Last erlaubt es durch entsprechende Verstellung der Länge der längsverstellbaren Aktuatoren über die Zeit, und damit durch entsprechende Krafteinleitung in des System die reale mit der theoretischen Position in Übereinstimmung zu bringen und den Schleppfehler und damit die Schwingungsneigung deutlich zu reduzieren.

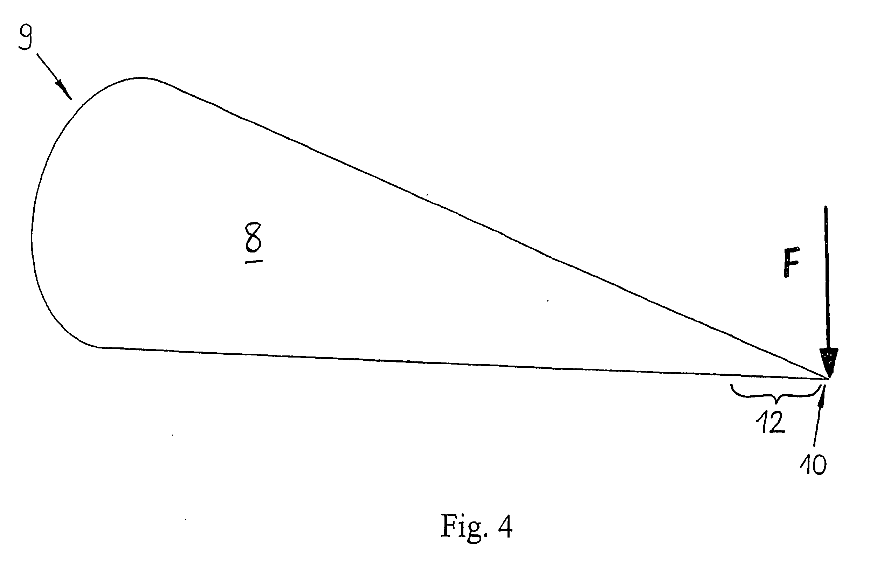

Die Fig. 4 bis 7 zeigen einen im Wesentlichen kegeligen Körper 8, dessen Basisfläche 9 als raumfest angenommen wird und auf dessen Spitze 10 eine Kraft F wirkt. Unter der Wirkung dieser Kraft F und zufolge der Fixierung der Basisfläche 9 kommt es zu einer Deformation des kegeligen Körpers 8, deren Größe und Richtung von der Geometrie des Körpers und dem Material, aus dem er besteht, abhängt. Die aus dieser Deformation resultierende Verschiebung der Spitze 10 kann nun entweder gemessen oder, beispielsweise mittels der Methode der finiten Elemente, bestimmt werden.

Diese Bestimmung der Verschiebung der Spitze 10 in Abhängigkeit von unterschiedlichen Richtungen der Kraft, bei orthogonaler Anordnung der Testkräfte zueinander reichen drei Versuche bzw. Berechnungen, und gegebenenfalls, wenn nicht die Spitze als Punkt betrachtet, sondern ein kleiner als starr betrachteter Endbereich 12 herangezogen wird, die Einwirkung von Momenten auf die Orientierung dieses starren Endbereiches, ist bei passender Anordnung und Auswahl wiederum durch dreifache Messung bzw. Berechnung möglich, aber im vorliegenden Fall der Darlegung der Modellbildung nicht berücksichtigt.

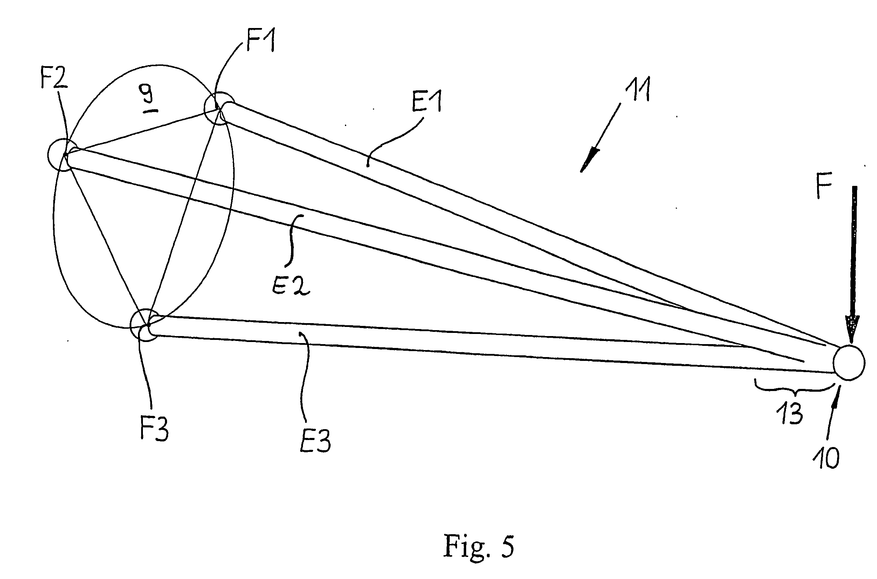

Aus diesem Grund der Beschränkung auf die Lage der Spitze 10 und der Einwirkung von Kräften, wie beispielsweise der Kraft F, ist es möglich, das in Fig. 5 dargestellte Ersatzstabwerk 11, bestehend aus drei Ersatzstäben E1, E2, E3 als Modell des kegeligen Körpers 8 heranzuziehen. Wesentlich ist dabei, dass die ideal gedachten Endpunkte der Ersatzstäbe E1, E2, E3 auf der Seite der Basisfläche 9 fest, aber momentenfrei schwenkbar befestigt sind und in der Spitze 10 ebenfalls zu einem Punkt, aber untereinander gelenkig, zusammenlaufen.

Die Wahl des Aufbaus dieses Ersatzstabwerkes 11 erfolgt aufgrund von Überlegungen, die dem mit der Festigkeitslehre vertrauten Fachmann geläufig sind. Wenn beispielsweise der zu ersetzende Körper 8 eine Symmetrieebene oder Symmetrieachse aufweist, so ist es vorteilhaft, wenn auch das Ersatzstabwerk diese Symmetrien besitzt. Wenn die zu erwartenden Kräfte in eine Richtung deutlich größer sind als in anderen Richtungen, so ist es günstig wenn diese Kräfte im wesentlichen von einem Ersatzstab aufgenommen werden bzw. wenn die Ersatzstäbe so angeordnet sind, dass sie symmetrisch zu der Fläche verlaufen, in der diese maximale oder häufigste Kraft eine Deformation verursacht. Es soll aber festgehalten werden, dass auch dann, wenn auf diese Überlegungen nicht geachtet wird und das Stabwerk aufgrund anderer Überlegungen erstellt wird, dieses Stabwerk brauchbar ist, wenn auch im allgemeinen der Rechenaufwand etwas größer sein wird, da verschiedene Vereinfachungen, die sich aufgrund der oben genannten Überlegungen weiter ergeben, dann nicht genutzt werden können.

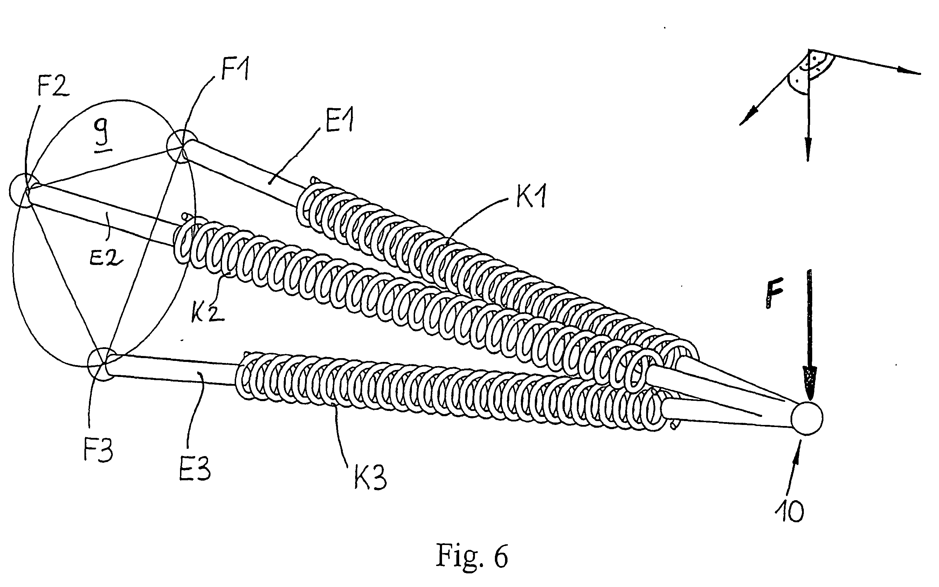

Die Fig. 6 zeigt nun, wie, rein schematisch, die Ersatzstäbe E1, E2, E3 unter Berücksichtigung von Ersatzfederkonstanten K1, K2, K3 ein Ersatzgebilde schaffen, das mit dem ursprünglichen Körper 8 eines gemeinsam hat: Bei fixierter Grundfläche 9, das heißt bei fixierten Fußpunkten F1, F2, F3 der Ersatzstäbe E1, E2, E3 bewegt sich die Spitze 10 unter der Kraft F genauso wie die (deshalb mit dem gleichen Bezugszeichen versehene) Spitze 10 des realen Körpers 8. Dieses Ziel kann dann erreicht werden, wenn aus der bekannten Kraft F und der bekannten Verschiebung die Ersatzfederkonstanten K1, K2, K3 berechnet werden, die in Summe und unter Berücksichtigung der Geometrie, der Massenverteilung und gegebenenfalls der Dämpfungseigenschaften des gewählten Ersatzstabwerkes 11 genau diese Verschiebung ergeben.

Da nun das Ersatzstabwerk 11 auch für die Berücksichtigung der Deformation in den anderen Richtungen, in Fig. 6 nur schematisch als orthogonales Koordinatensystem angedeutet, auf gleiche Weise zu zugeordneten Ersatzfederkonstanten führt, die ja immer nur in Richtung des jeweils betrachteten Stabes dessen Verlängerung bzw. Stauchung beschreiben, ist es im allgemeinen so, dass für jeden der Stäbe unterschiedliche Ersatzfederkonstanten für die unterschiedlichen Richtungen erhalten werden.

In verschiedenen Fällen, wenn beispielsweise die Deformation in eine Richtung bedeutsam ist und in den anderen Richtungen keine oder nur eine geringe Bedeutung hat, kann man sich damit behelfen, dass man die Ersatzfederkonstanten wählt, die für die Deformation in der wichtigen Richtung ein korrektes Bild liefern, man kann auch, wenn die unterschiedlichen Ersatzfederkonstanten nicht stark voneinander abweichen und wenn es notwendig ist die Deformation in mehreren Richtungen zu berücksichtigen, Mittelwerte wählen, man hat aber noch weitere Möglichkeiten zur Verfügung:

Die erste Möglichkeit besteht darin, die Geometrie zu ändern, hier insbesondere die Fußpunkte F1, F2 und F3 der Ersatzstäbe E1, E2, E3 auf der Basisfläche 9 anders anzuordnen und sodann die Zuordnung der Ersatzfederkonstanten K1, K2, K3 in den drei Richtungen erneut vorzunehmen. Aus dem Resultat: Verkleinerung der Unterschiede der drei Ersatzfederkonstanten für jeweils einen Stab oder Vergrößerung dieser Unterschiede, erkennt man sehr rasch, in welche Richtung und in welchem Ausmaß die Änderungen vorgenommen werden müssen, um zu einem befriedigenden Ergebnis zu gelangen. Solche iterativen Annäherungen an das technisch bestmögliche Ergebnis sind insbesondere auch auf dem Gebiete der Festigkeitslehre üblich, sowohl auf dem Gebiete des Maschinenbaus, als auch auf dem Gebiete des Hoch- und Tiefbaus, und stellen daher für den Fachmann in Kenntnis der Erfindung keine Schwierigkeit dar.

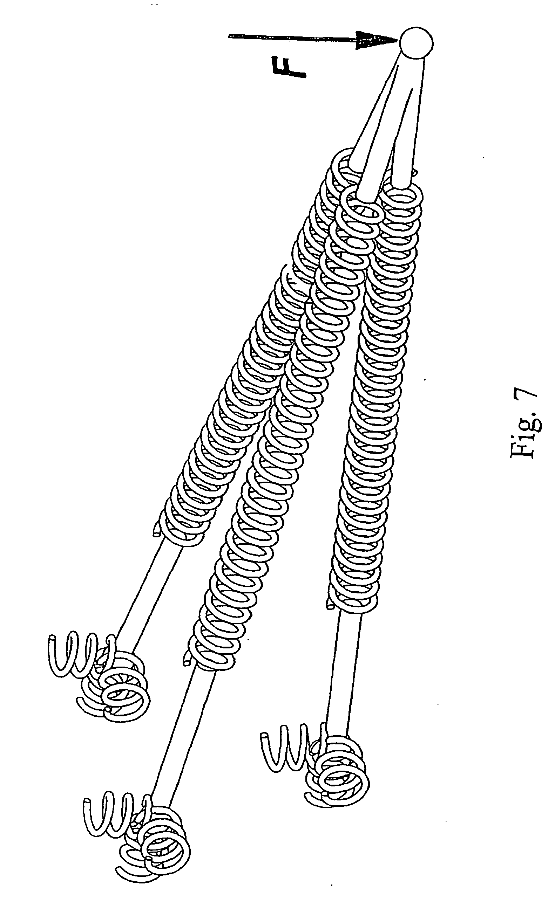

Eine andere Möglichkeit besteht darin, dass, wie in Fig. 7 dargestellt, jedem der Fußpunkte F1, F2, F3 eine Lagersteifigkeit zugeordnet wird, was bedeutet, dass die Fußpunkte F1, F2, F3 beim Modell nicht mehr ortsfest sind, sondern in Abhängigkeit von der resultierenden Kraft und dem resultierenden Drehmoment (wenn ein solches berücksichtigt wird) in der Basisfläche und normal zu ihr bewegt werden. Da die Aufhängung der Ersatzstäbe E1, E2, E3 in den Fußpunkten F1, F2, F3 sphärisch momentenlos erfolgt, ist die resultierende Verlagerung der Fußpunkte immer in der momentanen Richtung des dort angreifenden Stabes und führt, auch hier ist ein iterativer Prozess möglich, durch die Verlagerung des Fußpunktes zu einer Änderung des Zustandes des Ersatzstabwerkes 11 und damit unter Umständen auch zu einer Änderung der Richtung des betrachteten Stabes. Zumeist sind diese Änderungen allerdings so gering, dass sich jede Iteration erübrigt.

Der erfindungsgemäße Verfahren zur Abbildung eines realen Körpers 8 in Form eines Ersatzstabwerkes 11 wurde anhand eines sehr einfachen Anwendungsfalles beschrieben, das Anwendungsbeispiel, das anhand der Fig. 1 bis 3 erläutert wurde nimmt, wie weiter oben kurz erläutert, auch Rücksicht auf die Lage einer als beweglichen Plattform anzusehenden spitzen Bereiches 12, dieser kann zwar ohne Schwierigkeit am realen Körper 8 definiert werden, doch wäre es verfehlt, den nur zur Erläuterung eingezeichneten Bereich 13 am Ersatzstabwerk 11 als ein Abbild oder als Ersatzspitzenbereich 13 aufzufassen, da das Modell, das in Fig. 5 dargestellt ist, nur in der Lage ist, die Position der Spitze 10 (idealisiert) nicht aber die Orientierung einer eventuell diese Spitze 10 aufweisenden beweglichen Plattform oder eben eins Spitzenbereiches 12 abzubilden. Wenn dies geschehen soll, so ist ein Ersatzstabwerk, wie beispielsweise das Ersatzstabwerk 15 der Fig. 2, heranzuziehen.

Wie aus dem geschilderten Sachverhalt und dem dargelegten Verfahren leicht zu entnehmen ist, spielt die Abmessung der kinematischen Vorrichtung 1 keine Rolle, das erfindungsgemäße Verfahren kann gleichermaßen für einen Hafenkran oder eine im Mikrometerbereich tätige Werkzeugmaschine verwendet werden. Es kann die Erfindung nicht nur dazu verwendet werden, die Bewegung bzw. Orientierung des TCP 7 besonders genau zu lenken, sondern es ist selbstverständlich möglich, das erfindungsgemäße Verfahren dazu zu benutzen, die Masse der parallelkinematischen Vorrichtung weiter zu reduzieren und die Bewegungsgeschwindigkeit des TCP 7 zu erhöhen und die wegen der dadurch weicheren Konstruktion und höheren Massenträgheitskräfte größeren Abweichungen des TCP 7 von seiner Bahn zu korrigieren. Selbstverständlich können auch Zwischenformen dieser beiden Strategien gewählt werden, dies ist für den Fachmann auf dem Gebiete des jeweiligen Anwendungsgebietes in Kenntnis der Erfindung leicht möglich.

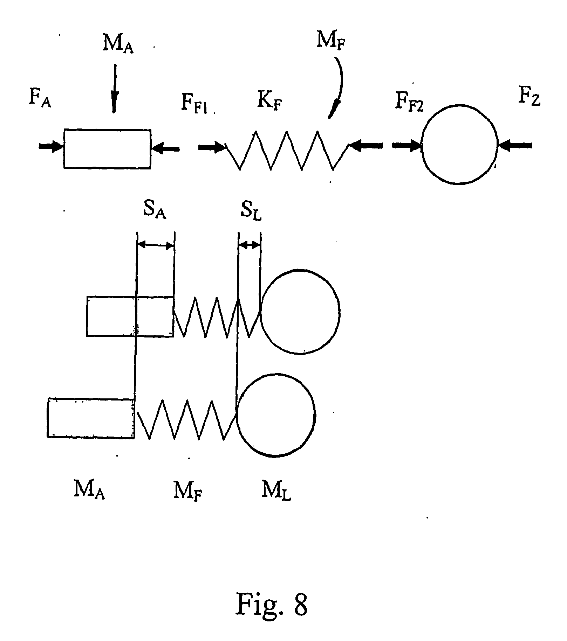

Die Fig. 8 zeigt eine Ersatzkinematik, die aus einem Antrieb und einer mittels einer Ersatzfeder mit dem Antrieb verbundene Last besteht. Der Antrieb A mit der Masse MA ist als Rechteck dargestellt, die Last L mit der Masse ML als Kreis und die Feder F mit der Masse MF als Zickzackgebilde. Die Richtung der Trajektorie ist durch den Doppelpfeil T angedeutet.

Die Fig. 8 stellt übereinander zwei Positionen der Ersatzkinematik dar, wobei die eine Position I als Ausgangslage und die Position II als momentane Lage angesehen werden kann. Ohne Beschränkung der Allgemeinheit kann es sich dabei auch um zwei Zwischenlagen handeln, wenn beispielsweise die Bewegung abschnittsweise betrachtet wird.

In der Nebenfigur wurden die einzelnen Teile dieses Modells nach den in der Mechanik üblichen Methoden voneinander getrennt dargestellt und die jeweils auf sie wirkenden Kräfte, die internen Kräfte sind dabei als sogenannte Schnittkräfte anzusehen, eingezeichnet. Dabei werden üblicherweise schon bei der Modellbildung die Massen (im vorliegenden Fall nur die eine Antriebsmasse MA) in die Lager verlegt, die Lager werden als Lagerpunkte idealisiert und die Verbindungen, bei einer Stabkinematik somit die Stäbe, sind als massefreie Federn anzusehen.

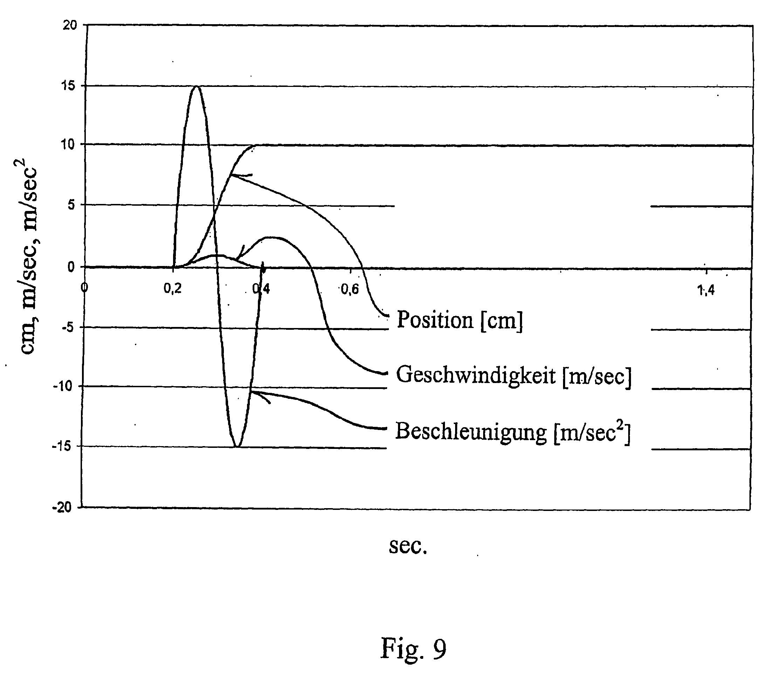

Die Fig. 9 zeigt die Bahndaten der gemäß dem Stand der Technik starr gedachten Kinematik bei der Überführung von der Lage 0 in die Lage 10. Es kommt zu dem durch eine leichte kappenförmige Erhebung angedeuteten Geschwindigkeitsverlauf und dem sinusähnlichen Verlauf der Beschleunigung. Im dargestellten Ausführungsbeispiel ist gut zu erkennen, dass selbst bei dem stetigen Bahnverlauf über der Zeit mit den ausgerundeten Ecken und bei der nur geringen Geschwindigkeit die Beschleunigung nicht nur groß ist sondern auch recht abrupt anfängt und endet.

Nach dem im Stand der Technik üblichen Modell des Antriebs samt Last als starres Gebilde gelten die eingezeichneten Bahn-, Geschwindigkeits- und Beschleunigungskurven für jeden einzelnen Punkt dieses kinematischen Gebildes, soferne nur seine Ausgangslage als ihm jeweils zugeordneter Nullpunkt angesehen wird.

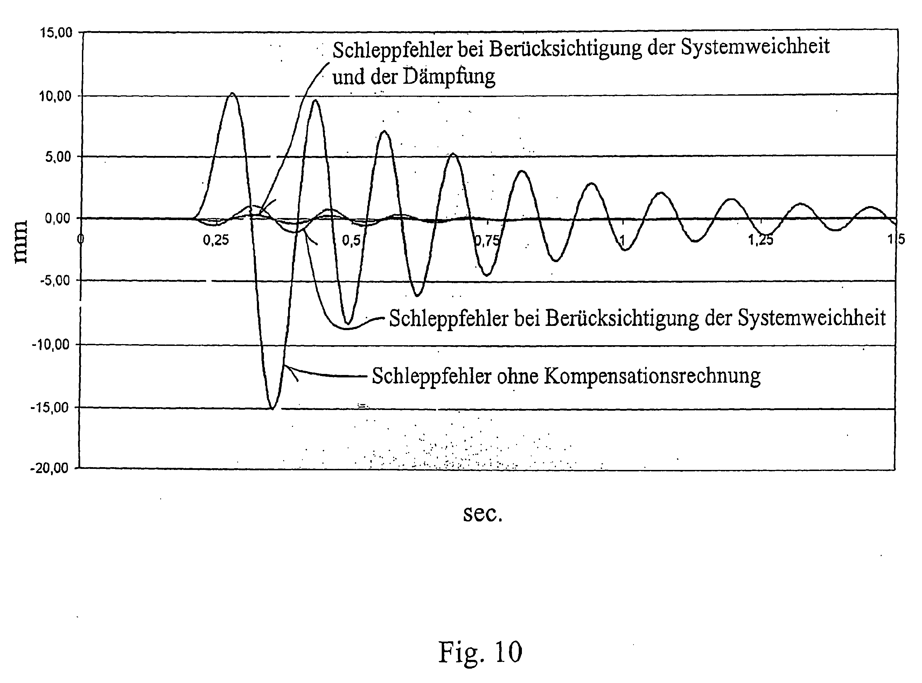

In Fig. 10 ist nun der Schleppfehler dargestellt, der bei der Ersatzkinematik (und damit in Realität) auftritt, wenn die Kräfte FF1 angewandt werden, die aus der Beschleunigungskurve der Fig. 9 nach dem Starrkörpermodell gemäß dem Stand der Technik ermittelt werden. Es ist dies die Abweichung der Lage der Last (am besten repräsentiert durch deren Schwerpunkt bzw. Arbeitspunkt bzw. TCP, es kann aber auch jeder andere Punkt dazu herangezogen werden) von der zur angegebenen Zeit gültigen Sollposition. Es ist leicht ersichtlich, dass der Schleppfehler für die gewählten Systemgrößen, einer Federsteifigkeit von 10 N/mm, einer Dämpfung von 0,02 Nmm/sec und einer Masse der Last von 4,11025 kg ein außerordentlich großes Überpendeln zeigt, das sein Maximum erreicht, wenn theoretisch die Endposition bereits erreicht sein sollte und das zu einem großen Überfahren des Zieles der Bewegung führt und um diese Ziellage herum mehr als eineinhalb Sekunden merklich schwingt.

In der Fig. 10 eingezeichnet ist auch die Abweichung der Last von der jeweiligen Solllage auf der Trajektorie, wenn erfindungsgemäß statt der gemäß dem Stand der Technik aufgebrachten Kraft FF1 die entsprechend korrigierte Kraft aufgebracht wird.

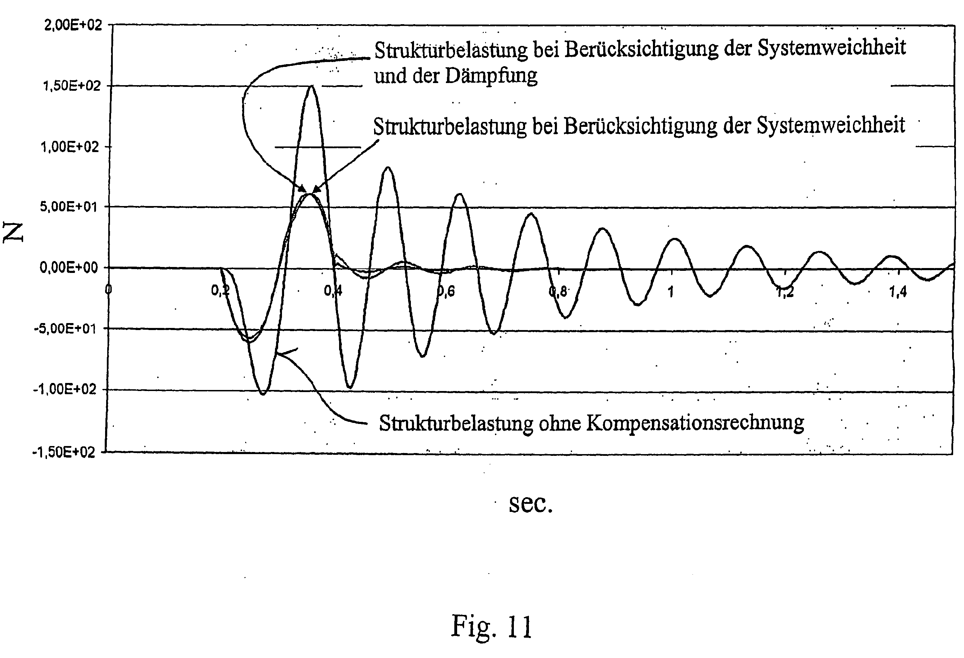

Die Fig. 11 zeigt einen völlig unerwarteten Effekt, der durch das erfindungsgemäße Verfahren erreicht wird, nämlich eine große Reduktion der maximalen Belastung der betrachteten Vorrichtung, die durch die Ersatzkinematik dargestellt ist. Es zeigt diese Figur die Belastung über die Zeit und man kann erkennen, dass gemäß dem Stand der Technik eine Maximalbelastung von etwa 150 N auftritt, während mit der erfindungsgemäßen Korrektur eine Belastung von nur 61,3 N somit nur 41% der Belastung gemäß dem Stand der Technik auftritt. Darüber hinaus sinkt diese Belastung auch wesentlich rascher ab, als es beim Verfahren gemäß dem Stand der Technik der Fall ist.

In Fig. 10 und 11 eingezeichnet ist noch jeweils eine dritte Kurve, die den Schleppfehler bzw. die Strukturbelastung darstellt, der bzw. die auftritt, wenn zusätzlich zur Elastizität der Vorrichtung noch deren innere Dämpfung, wie weiter oben angeführt, berücksichtigt wird. Es wurde dabei, wie in der Mechanik und speziell der Dynamik üblich, eine geschwindigkeitsabhängige Dämpfung mit konstantem Dämpfungsfaktor als Annäherung an die realen Verhältnisse gewählt und man kann erkennen, dass die dadurch erzielbare weitere Reduktion des Schleppfehlers merklich ist, während die Strukturbelastung sich kaum ändert. Es soll dazu noch festgehalten werden, dass die Berechnung der jeweils auftretenden Relativgeschwindigkeiten iterativ in einem Einschrittverfahren nach der Berechnung der Bewegungen nach dem erfindungsgemäßen Grundmodell erfolgte.

Eine Auswertung der Diagramme aus Fig. 10 und Fig. 11 ergibt für das Beispiel folgende Werte für die maximale Abweichung bzw. die maximale Belastung und zeigt dabei die erfindungsgemäßen Vorteile:

Ohne Kompensationsrechnung beträgt die maximale Abweichung 14,98 mm (wird zum Vergleich mit 100% festgelegt) und die maximale Belastung 149,8 N (wird zum Vergleich mit 100% festgelegt).

Mit der Berücksichtigung der Systemweichheit beträgt die maximale Abweichung 1,05 mm (entspricht einer Verbesserung um 93%) und die maximale Belastung 61,3 N (entspricht einer Verbesserung von 41 %).

Mit der Berücksichtigung der Systemweichheit und der Dämpfung beträgt die maximale Abweichung 0,31 mm (entspricht einer Verbesserung um 97,9 %) und die maximale Belastung 61,4 N (entspricht einer Verbesserung von 41 %).

Es stellen die Fig. 8 bis 12 bewusst eine extrem einfache und extrem weiche Vorrichtung und damit Ersatzkinematik dar, um die Vorgangsweise und die Effekte einfach und deutlich darlegen zu können. Es wurde auch darauf verzichtet, eine gekrümmte oder abgewinkelte Trajektorie im Detail zu behandeln, da dazu nur die Kenntnis der Steifigkeiten in drei orthogonalen Richtungen und die entsprechende Anwendung in den einzelnen Richtungen notwendig ist.

Aus den Darstellungen geht auch hervor, dass es vorteilhaft und bei "weichen" Systemen wie dem dargestellten so gut wie Notwendig ist, in der Regelung den zeitlichen Verlauf der Sollpositionen des TCP an den durch das Modell erzielten Ablauf anzupassen. Der Grund dafür ist, dass die Regelung ansonsten die Abweichung von dem nach dem starren Modell vorausbestimmten Ablauf als Resultat einer Störung ansieht durch entsprechende Eingriffe, die aber an das elastische Modell nicht angepasst sind, dessen Verbesserungen zumindest teilweise zunichte macht. Die entsprechenden Änderungen des Sollwertverlaufes können in Kenntnis der elastischen Eigenschaften der Kinematik vom Fachmann der Regelungstechnik leicht vorgenommen werden.

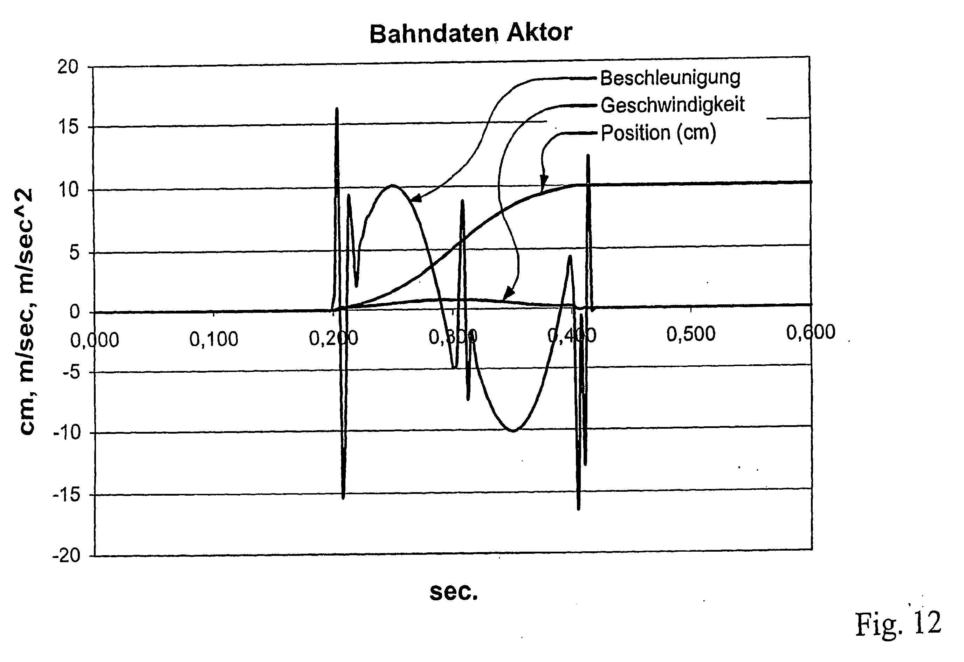

Die Fig. 12 zeigt den Verlauf der Bahndaten (Position, Geschwindigkeit, Beschleunigung) des Antriebs A gemäß dem erfindungsgemäßen Modell. Erstaunlich ist die überaus hohe Anfangsbeschleunigung, durch die die Kinematische Vorrichtung entsprechend ihrer Elastizität komprimiert und insgesamt beschleunigt wird und der in Stufen erfolgende Bremsvorgang, bei dem es auch zur Wiederherstellung der ursprünglichen Form der Kinematischen Vorrichtung kommt.

Es erscheint als ob es notwendig wäre, für die hohen Beschleunigungen hohe Antriebskräfte einzusetzen, doch ist zu bedenken, dass die Masse des Antriebs, und nur für diesen gilt die Darstellung, wesentlich geringer ist als die Masse der Last. Daher ist trotz der hohen Beschleunigungen des Antriebs auch die Gesamtbelastung der Vorrichtung deutlich geringer als im Stand der Technik.

Zusammenfassend kann festgehalten werden, dass die Erfindung die Formänderung der realen Vorrichtung während ihrer Bewegung durch die dabei auftretenden Kräfte und ihre Last dynamisch berücksichtigt und den zeitlichen Verlauf der Antriebskräfte auf diese Deformation abstimmt, wodurch die Bewegung der Last (TCP) zeitlich dem projektierten Verlauf folgt und Schwingungen der Last bzw. Vibrationen der Vorrichtung vermieden werden.

Man sieht aus diesen Darlegungen, dass ein Verfahren ähnlich dem der AT 501 167 B, aber nicht so sehr für eine Last, sondern für die Wirkung der Antriebskraft, nicht in Richtung der Schwerkraft, sondern in Richtung der Trajektorie, und nicht statisch sondern dynamisch, angewandt wird, wodurch es möglich wird, die in Richtung der Trajektorie wirkenden Antriebskräfte der Aktuatoren entsprechend darauf abzustimmen. Damit verbunden ist die Möglichkeit, das erfindungsgemäße Verfahren in anderen Richtungen als der Trajektorie anzuwenden, bis hin zu einer vollständigen Berücksichtigung der räumlichen Situation. Dies ist über den gesamten Bewegungsablauf möglich oder nur in besonders kritischen Teilbereichen, beispielsweise nahe des Endpunktes der Bewegung.

Selbstverständlich wird man trotz der durch die Erfindung erzielte starke Verringerung des Schleppfehlers bei vielen Anwendungsgebieten auf die üblichen Sensoren, die Abweichungen feststellen, nicht verzichten können oder wollen, doch wird gegebenenfalls auch das Zurückführen des TCP nach erfolgter Abweichung durch das erfindungsgemäße Modell der Vorrichtung deutlich verbessert, da das bisher nicht vermeidbare Überschwingen auch in diesem Fall praktisch vollständig entfällt.

Definitionen und Formeln zur Fig. 8:

$$F_A \;=\; F_{F1} \;+\; M_A * \ddot{S}_A \qquad\qquad \text{Wirkmasse Antrieb} \;=\; M_A * \ddot{S}_A$$

$$F_{F1} \;=\; F_Z \;+\; M_L * \ddot{S}_L \;+\; \tfrac{1}{2} M_F * \ddot{S}_A \;+\; \tfrac{1}{2} M_F * \ddot{S}_L$$

$$F_Z \;=\; \text{Zusatzkraft} \qquad\qquad K_F \;=\; \text{Federsteifigkeit}$$

$$\text{Wirkmasse Feder} \;=\; \tfrac{1}{2} M_F * \ddot{S}_A \;+\; \tfrac{1}{2} M_F * \ddot{S}_L$$

$$F_{F2} \;=\; F_Z \;+\; M_L * \ddot{S}_L$$

## Patentansprüche

1.  Verfahren zur wesentlichen Verringerung des Schleppfehlers einer Vorrichtung (1), welche einen bewegten punkt (7) gegenüber einer festen Plattform (2) mittels zumindest eines Aktuators entlang einer vorgegebenen Trajektorie in einem vorgegebenen zeitlichen Verlauf, der Soll-Bewegung, für die unter Zugrundelegung eines Starrkörpermodells der Vorrichtung (1) ein zeitlicher Verlauf der Länge und der Kraft jedes Aktuators bestimmt wird, bewegt, **dadurch gekennzeichnet, dass**:

    a) Vor Inbetriebnahme ein Modell der Vorrichtung (1) geschaffen wird, das die Massenverteilung, Geometrie und die Elastizität in Bezug zum bewegten Punkt (7) gegenüber der festen Plattform (2), zumindest entlang der Trajektorie wiedergibt;
    b) Rechnerisch vor Inbetriebnahme der Vorrichtung (1) die Abweichung der Lage des bewegten Punktes (7), von der für den jeweiligen Zeitpunkt betrachteten Soll-Position, zumindest entlang der Trajektorie, zufolge der aus dem Starrkörpermodell bekannten Kräfte der Aktuatoren, der auf die Vorrichtung (1) wirkenden bekannten äußeren Kräfte, und der aus der Soll-Bewegung ableitbaren Massenwirkungskräfte bestimmt werden;
    c) Rechnerisch vor Inbetriebnahme der Vorrichtung (1) am Modell aus den bestimmten Abweichungen und/ oder der zeitlichen Abfolge dieser Abweichungen die Änderungen der Länge und/oder Kraft jedes Aktuators bestimmt werden, die notwendig sind, um die Abweichung der Lage des bewegten Punktes (7) von der Soll-Position zu eliminieren, und dass diese geänderten Werte in das Modell als Soll-Werte der Länge und/oder Kraft jedes Aktuators für die betrachtete Soll-Bewegung aufgenommen werden;
    d) die Schritte a) bis c) gegebenenfalls iterativ wiederholt werden;
    e) Im Betrieb der Vorrichtung (1) dieses Modell des Zusammenhanges zwischen dem Sollwert der Länge/Kraft jedes Aktuators mit der Soll-Bewegung verwendet wird.

**2.** Verfahren nach Anspruch 1, **dadurch gekennzeichnet, dass** Geometrie und Elastizität der gesamten Vorrichtung (1) im Modell und seiner Anwendung berücksichtigt werden.

**3.** Verfahren nach Anspruch 1 oder 2, **dadurch gekennzeichnet, dass** das Modell der Vorrichtung (1) auch deren mechanische Dämpfung, bevorzugt in Form einer geschwindigkeitsabhängigen Dämpfung mit konstantem Dämpfungsfaktor, enthält.

**4.** Verfahren nach einem der Ansprüche 1 oder 3, **dadurch gekennzeichnet, dass** ein Modell der Vorrichtung (1) in Form einer 3-2-1-Ersatzkinematik verwendet wird, deren feste Plattform (2) geometrisch die feste Fläche abbildet und deren bewegliche Plattform (4) den beweglichen Punkt; dass die Massenverteilung, die Elastizität und gegebenenfalls die mechanische Dämpfung der realen Vorrichtung (1) ermittelt werden, dass an der realen Vorrichtung (1) durch Berechnung oder reale Belastung, Kraft (F) und gegebenenfalls Moment, und durch Berechnung der daraus resultierenden realen Deformation in zumindest der Richtung der Trajektorie die Deformationskomponenten ermittelt werden, dass anschließend diese Größen an der Ersatzkinematik den einzelnen Stäben, Lagern, Angriffspunkten als Ersatzmassen, Ersatzfederkonstanten und gegebenenfalls Ersatzdämpfungsglieder so zugeordnet werden, dass deren bewegliche Plattform (4) unter gleichen äußeren Bedingungen die gleiche Bewegung ausführt wie der bewegliche Punkt der realen Vorrichtung (1), wobei gegebenenfalls statt dieser Bestimmung die Durchrechnung der Deformation der Vorrichtung (1), beispielsweise mittels des Verfahrens der finiten Elemente erfolgt.

**5.** Verfahren nach einem der Ansprüche 1 bis 4, **dadurch gekennzeichnet, dass** das Modell die Elastizitäten, Masseverteilungen und gegebenenfalls Dämpfungseigenschaften der Vorrichtung (1) in zumindest einer weiteren Richtung, die nicht parallel zur Trajektorie verläuft, abbildet, daraus die reale Position des bewegten Punktes ermittelt und mit der theoretischen Position in der betrachteten Richtung vergleicht und die Positionen gegebenenfalls an der realen Vorrichtung (1) durch Betätigung entsprechender Aktuatoren in Übereinstimmung bringt.

**Claims**

**1.** Method for reducing considerably the lag error of a device (1), which moves a moved point (7) in relation to a fixed platform (2) by means of at least one actuator along a predefined trajectory within a predefined temporal profile, the target movement, for which a temporal profile of the length and force of each actuator is determined, taking a rigid body model of the device (1) as a basis,
<u>**characterised in that**</u>:

a) before a model of the device (1) is started up, the mass distribution, geometry and elasticity with respect to the moved point (7) in relation to the fixed platform (2) are reproduced, at least along the trajectory;
b) the deviation of the position of the moved point (7) from the target position considered for the relevant moment in time is calculated before the device (1) is started up, at least along the trajectory, according to the forces of the actuators known from the rigid body model, the known external forces acting on the device (1) and the mass effect forces which can be derived from the target movement;
c) before the device (1) is started up, the changes to the length and/or force of each actuator are calculated on the model from the determined deviations and/or temporal sequence of these deviations, these changes being necessary to eliminate the deviation of the position of the moved point (7) from the target position and these amended values being recorded in the model as target values for the length and/or force of each actuator for the considered target movement;
d) steps a) to c) are repeated iteratively where necessary;
e) this model of the correlation between the target value of the length/force of each actuator and the target movement is used during operation of the device (1).

**2.** Method according to claim 1, **characterised in that** the geometry and elasticity of the entire device (1) are considered in the model and in the application thereof.

**3.** Method according to claim 1 or 2, **characterised in that** the model of the device (1) also contains the mechanical damping thereof, preferably in the form of speed-dependent damping with a constant damping factor.

**4.** Method according to one of claims 1 or 3, **characterised in that** a model of the device (1) is used in the form of 3-2-1 substitute kinematics, of which the fixed platform (2) geometrically maps the fixed surface and of which the movable platform (4) geometrically maps the movable point; **in that** the mass distribution, elasticity and possibly the mechanical damping of the actual device (1) are established, **in that** the deformation components are established for the actual device (1) by calculated or actual load, force (F) and possibly torque, and by calculating the resultant actual deformation in at least the direction of the trajectory, **in that** these variables at the substitute kinematics are then assigned to the individual rods, bearings, and points of application as substitute masses, substitute spring constants and possibly substitute damping members so that the movable platform (4) thereof, under like external conditions, carries out the same movement as the movable point of the actual device (1), it being possible, instead of carrying out this determination, to calculate the deformation of the device (1), for example by means of the finite element method.

**5.** Method according to one of claims 1 to 4, **characterised in that** the model maps the elasticities, mass distributions and possibly the damping properties of the device (1) in at least one further direction, which does not run parallel to the trajectory, from which the actual position of the moved point is established and is compared to the theoretical position in the considered direction and, where necessary, the positions at the actual device (1) are harmonised by actuation of corresponding actuators.

**Revendications**

**1.** Procédé pour réduire sensiblement l'erreur de poursuite d'un dispositif (1) qui, au moyen d'au moins un actionneur, déplace un point (7), déplacé par rapport à une plate-forme fixe (2), le long d'une trajectoire prédéterminée selon une évolution prédéterminée dans le temps, à savoir le mouvement de consigne, pour lequel l'évolution dans le temps de la longueur et de la force de chaque actionneur est déterminée sur la base d'un modèle de corps rigide du dispositif (1),
**caractérisé en ce que** :

a) avant la mise en service, on crée un modèle du dispositif (1) qui reproduit la répartition des masses, la géométrie et l'élasticité relativement au point (7) déplacé par rapport à la plate-forme fixe (2), au moins le long de la trajectoire ;
b) avant la mise en service du dispositif (1), on détermine par le calcul l'écart de la position du point déplacé (7) par rapport à la position de consigne considérée pour l'instant respectif, suite aux forces exercées par les actionneurs qui sont connues d'après le modèle de corps rigide, aux forces extérieures connues agissant sur le dispositif (1), et aux forces d'interaction de masse qui peuvent être déduites du mouvement de consigne ;
c) avant la mise en service du dispositif (1), on détermine par le calcul sur le modèle, à partir des écarts déterminés et/ou de la succession dans le temps de ces écarts, les modifications de la longueur et/ou de la force de chaque actionneur qui sont nécessaires pour éliminer l'écart de la position du point déplacé (7) par rapport à la position de consigne, et ces valeurs modifiées sont enregistrées dans le modèle comme valeurs de consigne de la longueur et/ou de la force de chaque actionneur pour le mouvement de consigne considéré ;
d) les étapes a) à c) sont répétées le cas échéant de façon itérative ;
e) pendant le service du dispositif (1), on utilise ce modèle de la relation entre la valeur de consigne de la longueur/force de chaque actionneur et le mouvement de consigne.

**2.** Procédé selon la revendication 1, **caractérisé en ce que** la géométrie et l'élasticité de l'ensemble du dispositif (1) sont prises en compte dans le modèle et dans son application.

**3.** Procédé selon la revendication 1 ou 2, **caractérisé en ce que** le modèle du dispositif (1) comprend également l'amortissement mécanique de ce dernier, de préférence sous la forme d'un amortissement en fonction de la vitesse avec un facteur d'amortissement constant.

**4.** Procédé selon l'une des revendications 1 ou 3, **caractérisé en ce qu'**on utilise un modèle du dispositif (1) sous la forme d'une cinématique équivalente 3-2-1 dont la plate-forme fixe (2) reproduit géométriquement la surface fixe et la plate-forme mobile (4) le point mobile, **en ce qu'**on détermine la répartition des masses, l'élasticité et le cas échéant l'amortissement mécanique du dispositif réel (1), **en ce qu'**on détermine sur le dispositif réel (1), par le calcul ou par une charge réelle, la force (F) et éventuellement le couple, et par le calcul de la déformation réelle qui en résulte les composantes de déformation au moins dans la direction de la trajectoire, **en ce qu'**on associe ensuite, sur la cinématique équivalente, ces grandeurs aux barres, paliers et points d'attaque individuels sous la forme de masses équivalentes, de constantes de ressort équivalentes et le cas échéant d'éléments d'amortissement équivalents, de telle sorte que sa plate-forme mobile (4) effectue, dans les mêmes conditions extérieures, le même mouvement que le point mobile du dispositif réel (1), sachant qu'on effectue éventuellement au lieu de cette détermination le calcul complet de la déformation du dispositif (1), par exemple au moyen de la méthode des éléments finis.

5. Procédé selon l'une des revendications 1 à 4, **caractérisé en ce que** le modèle reproduit les élasticités, les répartitions des masses et éventuellement les caractéristiques d'amortissement du dispositif (1) dans au moins une autre direction qui ne s'étend pas parallèlement à la trajectoire, détermine d'après cela la position réelle du point déplacé et la compare à la position théorique dans la direction considérée, et amène le cas échéant en coïncidence les positions sur le dispositif réel (1) par l'actionnement d'actionneurs correspondants.

Fig. 1

Fig. 2

EP 2 089 780 B1

DP   TP

14

15

TP

3

7

1'

Fig. 3

Fig. 4

Fig. 5

EP 2 089 780 B1

Fig. 6

EP 2 089 780 B1

Fig. 7

Fig. 8

Fig. 9

Fig. 10

Fig. 11

EP 2 089 780 B1

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 614 A
- EP 547 A
- US 5568379 A
- EP 471695 A
- US 5192174 A
- FR 2670705 A1
- WO 2006094320 A1
- EP 614547 A
- EP 583494 A
- WO 9928095 A

- CA 2312802 A
- JP 7276273 A
- WO 0176829 A
- US 5111590 A
- US 4778318 A
- US 4262336 A
- US 3941988 A
- AT 501167 B
- WO 2006094320 A